# EUROPÄISCHE PATENTSCHRIFT

(11) **EP 3 978 376 B1**
(45) Veröffentlichungstag und Bekanntmachung des Hinweises auf die Patenterteilung: **24.05.2023**
(21) Anmeldenummer: 20199654.3
(22) Anmeldetag: 01.10.2020
(51) Int. Cl.: B65B 41/04, B65G 47/90, B65H 3/08, B65H 5/12, B65B 11/00, B65B 21/24, B65G 47/84

(54) **VERPACKUNGSMASCHINE ZUM VERPACKEN VON PRODUKTEN ODER PRODUKTGRUPPEN SOWIE VERFAHREN ZUM BETREIBEN EINER SOLCHEN VERPACKUNGSMASCHINE**
PACKAGING MACHINE FOR PACKAGING PRODUCTS OR PRODUCT GROUPS AND METHOD FOR OPERATING SUCH A PACKAGING MACHINE
MACHINE D'EMBALLAGE PERMETTANT D'EMBALLER DES PRODUITS OU DES GROUPES DE PRODUITS AINSI QUE PROCÉDÉ DE FONCTIONNEMENT D'UNE TELLE MACHINE D'EMBALLAGE

(43) Veröffentlichungstag der Anmeldung: 06.04.2022
(73) Patentinhaber: Illinois Tool Works Inc., Glenview, IL 60025 (US)
(72) Erfinder: DETERMANN, Frank, 49832 Freren (DE); WÖHLE, Linus, 48480 Schapen (DE)
(74) Vertreter: Meissner Bolte Partnerschaft mbB

(56) Entgegenhaltungen:
- GB-A- 1 161 054
- US-A- 5 447 302
- US-A- 6 058 684
- US-B1- 6 224 050

## Beschreibung

Die vorliegende Erfindung betrifft allgemein Verpackungsmaschinen zum Verpacken von Produkten oder Produktgruppen in einer Umverpackung bzw. Zweitverpackung. Die Erfindung betrifft ferner eine entsprechendes Verpackungsverfahren.

Insbesondere betrifft die Erfindung vorzugsweise (aber nicht ausschließlich) sog. Sekundär-Verpackungsmaschinen, welche ausgebildet sind, Verpackungen, insbesondere Großpackungen (Gebinde) herzustellen, und zwar indem die Produkte, insbesondere bereits verpackte Produkte, welche zu einem Gebinde zusammengestellt sind, in ein Umverpackungsmaterial einzuschlagen.

Aus dem Gebiet der Verpackungstechnik sind zahlreiche Umverpackungen bekannt. Mit Umverpackungen werden Verpackungen bezeichnet, deren bestimmungsgemäßer Inhalt andere Packungen sind. Packungen werden daher auch als Erst- oder Primärverpackungen und Umverpackungen als Zweit- oder Sekundärverpackungen bezeichnet. Als Erstverpackungen können beispielsweise auch Packungsmäntel angesehen werden. Packungsmäntel dienen als "Halbzeug" für die Herstellung von Lebensmittel- oder Getränkepackungen. Packungsmäntel werden üblicherweise aus flachen Zuschnitten hergestellt und können beispielsweise durch Falten des Zuschnitts und Verschweißen oder Verkleben einer Naht hergestellt werden.

Eine Umverpackung bzw. Sekundärverpackung hat somit insbesondere den Zweck, mehrere Primärpackungen oder Packungsmäntel zu Einheiten zusammenzufassen, um diese einfacher auf Paletten oder dergleichen stapeln und kompakt transportieren zu können. Eine weitere Funktion von Umverpackungen liegt darin, die in der Umverpackung enthaltenen Produkte und deren Primär-Verpackung bzw. die in der Umverpackung enthaltenen Packungsmäntel vor äußeren Einflüssen wie Stößen, Beschädigungen oder Verschmutzungen zu schützen. Die von der Umverpackung befreiten Einheiten von Produkten bzw. Packungsmänteln werden an ihrem Bestimmungsort beispielsweise unmittelbar einer Füllmaschine zugeführt.

Der hierin verwendete Begriff "Verpackungsmaschine" umfasst insbesondere auch den Begriff Gruppiereinrichtung an sich bzw. ist als Bestandteil einer größeren Anlage zu verstehen. Die Verpackungsmaschinen sind beispielsweise Bestandteil einer Abfülllinie, die im Allgemeinen innerhalb einer Produktionshalle angeordnet ist.

Einzeln verpackte Produkte, wie beispielsweise in Kartons eingefüllte Getränke oder in Tüten verpacktes Mehl oder dergleichen, werden zum besseren Transport anschließend zu größeren Gebinden zusammengefasst. Hierzu werden die Produkte in einer Verpackungsmaschine zusammen gefördert und durch entsprechende Steuerung der Transportbänder zu Gruppen gewünschter Größe zusammengefasst. Ein solches Gebinde kann dann beispielsweise durch Einfüllen mehrerer Produkte in eine Verpackung aus Karton oder durch Einwickeln in Folie erfolgen, die anschließend geschrumpft wird, so dass das Gebinde stabil wird.

Aus der Druckschrift US 2002/0189204 A1 ist beispielsweise ein Verfahren zum Einschlagen von Produkten mit einer Schrumpffolie und einer Vorrichtung hierzu bekannt.

Dokumente GB1161054A und US5447302A beziehen sich auch auf Greifereinrichtungen für Verpackungsmaschinen.

Für die Verarbeitung, Zusammenstellung, Gruppierung und Verpackung von Produkten, wie beispielsweise in Karton eingefüllte Getränke oder in Tüten verpacktes Mehl oder dergleichen, gibt es die unterschiedlichsten Verpackungsarten.

Insbesondere bei nicht völlig formstabilen Produkten, wie beispielsweise PET-Getränkebehältern, ist es im Hinblick auf die bessere logistische Handhabbarkeit notwendig, dieses Produkte in gruppierter Anordnung mit einer Kartonverpackung zu versehen. Wahlweise können diese Gebindeanordnungen anschließend mit Folie umhüllt und diese mittels einer Erwärmungsprozesses geschrumpft werden, um einen stabilen Gebindeverbund zu erhalten, der leicht transportiert und gestapelt werden kann.

Eine weitere Gebindevariante wird als "shrink-only" bezeichnet, da hierbei die zusammengestellten Produkte ohne weitere Kartonumverpackung mit Folie umhüllt und diese aufgeschrumpft wird. Die Formstabilität dieser Gebindevariante wird ausschließlich von der Schrumpffolie gewährleistet.

Gemäß einer weiteren Verpackungsart werden die zusammengestellten Produkte nur mit einer Kartonverpackung versehen, wobei auf das Einschlagen der so gebildeten Gebinde in Folie verzichtet wird.

Bei dieser Verpackungsart werden üblicherweise Karton oder Wellpappe als Materialien für Umverpackungen eingesetzt. Umverpackungen solcher Art werden hierin auch unter dem Begriff "Umkarton" zusammengefasst.

Losgelöst von der Frage, ob als Umverpackungsmaterial Karton, Wellpappe und/oder Folie verwendet wird, sind die Werkstoffe für die Materialien der Umverpackungen relativ teuer. Ein weiterer Nachteil dieser Umverpackungen ist, dass die Umverpackungsmaterialien am Bestimmungsort, wie beispielsweise einer Füllmaschine, geöffnet, von der Füllmaschine beseitigt und anschließend entsorgt werden müssen.

Von daher fällt durch die Umverpackungen nach ihrer Verwendung ein hoher Aufwand bezüglich der Entsorgung der Umverpackungen am Bestimmungsort der in ihnen gelagerten Produkte an. Die Entsorgung der Umverpackung gestaltet sich auch deshalb als problematisch, da es sich bei der Umverpackung in der Regel um Karton- oder Wellpappematerial, also relativ stabile Verpackungen handelt. Der durch die Umverpackungen aus Karton oder Wellpappe anfallende Abfall weist von daher ein hohes Volumen und auch ein hohes Gewicht auf.

Obwohl Umverpackungen aus Kunststoff, wie insbesondere Folien, gegenüber Umverpackungen aus Karton oder Wellpappe unter Gesichtspunkten des Gewichts und Volumens als vorteilhaft anzusehen sind, so weisen diese Kunststoff-Umverpackungsmaterialien dennoch erhebliche ökologische Nachteile auf. Insbesondere wird erwartet, dass der Rückbau, das Recycling und die Verwertung insbesondere der derzeit verwendeten Umverpackungsmaterialien aus Kunststoff in der Zukunft erhebliche Entsorgungsprobleme mit sich bringen.

Von daher besteht in der Verpackungsindustrie ein zunehmender Bedarf nach Umverpackungen, bei welchen die Ökoeffektivität oder Ökoeffizienz deutlich verbessert ist im Vergleich zu herkömmlichen Umverpackungsmaterialien, wie beispielsweise Karton, Wellpappe oder Kunststofffolien.

Vor diesem Hintergrund liegt der Erfindung die Aufgabe zugrunde, eine Verpackungsmaschine der eingangs beschriebenen und zuvor näher erläuterten Art so auszugestalten und weiterzubilden, dass die Nachteile aus dem Stand der Technik vermieden werden.

Insbesondere soll eine Verpackungsmaschine angegeben werden, bei deren Betrieb Kosten für das Material der Umverpackungen selbst eingespart werden können. Ferner soll eine Reduzierung des durch die Umverpackungen anfallenden Abfalls erzielt werden.

Zur Lösung dieser Aufgabe wird erfindungsgemäß eine Verpackungsmaschine gemäß dem unabhängigen Patentanspruch 1 vorgeschlagen, wobei vorteilhafte Weiterbildungen der Verpackungsmaschine in den abhängigen Patentansprüchen angegeben sind.

Die der Erfindung zugrundeliegende Aufgabe wird ferner durch ein Verpackungsverfahren gemäß dem nebengeordneten Patentanspruch 10 gelöst.

Die erfindungsgemäße Verpackungsmaschine und das erfindungsgemäße Verpackungsverfahren zeichnen sich insbesondere dadurch aus, dass in einer besonders effizienten und störungsfreien Weise Produkte oder Produktgruppen mit insbesondere dünnem Verpackungsmaterial aus Papier oder Karton verpackt werden können. Zu diesem Zweck weist die erfindungsgemäße Verpackungsmaschine eine spezielle Vereinzelungseinrichtung auf, mit welcher Papier- oder Kartonzuschnitte aus einem - im Vergleich zu herkömmlich verwendeten Umverpackungszuschnitten - dünnen Material sicher von einer Verpackungszuführung einzeln absepariert und auf die zu verpackenden Produkt oder die zu verpackenden Produktgruppen ordnungsgemäß übergeben werden können.

Im Einzelnen weist die erfindungsgemäße Verpackungsmaschine zum Verpacken von Produkten oder Produktgruppen in insbesondere Papiermaterial oder dünnem Kartonmaterial eine Verpackungszuführung auf, um flache Papier- oder Kartonzuschnitte zuzuführen.

Darüber hinaus weist die erfindungsgemäße Verpackungsmaschine die bereits erwähnte Vereinzelungseinrichtung auf, welche ausgebildet ist, die zugeführten Papier- oder Kartonzuschnitte einzeln abzuseparieren und die abseparierten Papieroder Kartonzuschnitte auf ein zu verpackendes Produkt oder auf eine zu verpackende Produktgruppe zu übergeben.

Erfindungsgemäß ist insbesondere vorgesehen, dass die Vereinzelungseinrichtung mindestens einen Greifkopf und vorzugsweise genau zwei einander gegenüberliegende Greifköpfe und einen dem mindestens einen Greifkopf zugeordneten Mechanismus aufweist zum vorzugsweise kontinuierlichen Bewegen des mindestens einen Greifkopfs auf einer Umlaufbahn zwischen der Verpackungszuführung und einem Übergabebereich, in welchem die einzelnen Papier- oder Kartonzuschnitte von dem mindestens einen Greifkopf auf das zu verpackende Produkt oder auf die zu verpackende Produktgruppe übergeben werden.

Dünne Umverpackungsmaterialien, insbesondere Umverpackungen aus Papiermaterial oder dünnem Kartonmaterial, sind naturgemäß deutlich biegeschlaffer als herkömmlich eingesetzte, relativ dicke Karton- oder Wellpappematerialien. Um solche biegeschlaffe Umverpackungsmaterialien beispielsweise aus Papier oder dünnem Kartonmaterial auch mit einer hohen Taktzahl gemäß einem vorab festgelegten oder festlegbaren Ereignisablauf sicher auf die zu verpackenden Produkte oder auf die zu verpackenden Produktgruppen ablegen zu können, müssen beim Abseparieren der zugeführten Papier- oder Kartonzuschnitte und beim Übergeben der abseparierten Papier- oder Kartonzuschnitte besondere Vorsichtsmaßnahmen beachtet werden, da - aufgrund der biegeschlaffen Natur dieser Umverpackungszuschnitte - ansonsten nicht sichergestellt ist, dass die Umverpackungszuschnitte einzeln absepariert und geeignet, d.h. insbesondere knick- und faltenfrei und im Hinblick auf die zu verpackenden Produkte oder im Hinblick auf die zu verpackenden Produktgruppen geeignet ausgerichtet, abgelegt werden.

Zu diesem Zweck ist erfindungsgemäß insbesondere vorgesehen, dass der dem Greifkopf zugeordnete Mechanismus ausgebildet ist, den mindestens einen Greifkopf in einer ungleichförmigen Bahnbewegung derart anzutreiben, dass der mindestens eine Greifkopf im Bereich der Verpackungszuführung und im Übergabebereich langsamer bewegt wird als beim Übergang des mindestens einen Greifkopfs von der Verpackungszuführung zu dem Übergabebereich.

Mit anderen Worten, der dem mindestens einen Greifkopf zugeordnete Mechanismus ist einerseits ausgebildet, den mindestens einen Greifkopf in einer kontinuierlichen Bewegung auf einer Umlaufbahn zwischen der Verpackungszuführung und dem Übergabebereich zu bewegen. Auf diese Weise ist ein kontinuierlicher Betrieb beim Abseparieren der mit Hilfe der Verpackungszuführung zugeführten Papier- oder Kartonzuschnitte und beim Übergeben der abseparierten Papieroder Kartonzuschnitte auf das zu verpackende Produkt bzw. auf die zu verpackende Produktgruppe gewährleistet.

Bei insbesondere biegeschlaffen Umverpackungsmaterialien ist hingegen die Abseparierung der zugeführten Papier- oder Kartonzuschnitte und das Übergeben der abseparierten Papier- oder Kartonzuschnitte auf das zu verpackende Produkt bzw. auf die zu verpackende Produktgruppe kritisch, da hier aufgrund der biegeschlaffen Natur des Umverpackungsmaterials eine Fehleranfälligkeit bzw. Störanfälligkeit erhöht ist.

Diese Fehler- bzw. Störanfälligkeit kann deutlich minimiert werden, indem der eigentliche Vorgang des Abseparierens und der eigentliche Vorgang des Übergebens der abseparierten Papier- oder Kartonzuschnitte auf das zu verpackende Produkt bzw. auf die zu verpackende Produktgruppe verzögert erfolgt.

Eine derartige Verzögerung beim Abseparieren bzw. beim Übergeben der Papieroder Kartonzuschnitte gewährleistet erfindungsgemäß der dem mindestens einen Greifkopf zugeordnete Mechanismus, und zwar indem der Mechanismus ausgebildet ist, den mindestens einen Greifkopf derart in einer ungleichförmigen Bahnbewegung anzutreiben, dass der mindestens eine Greifkopf im Bereich der Verpackungszuführung und im Übergabebereich langsamer bewegt wird als beim Übergang des mindestens einen Greifkopfs von der Verpackungszuführung zu dem Übergabebereich.

Somit ist die erfindungsgemäße Verpackungsmaschine und insbesondere die erfindungsgemäße Vereinzelungseinrichtung der Verpackungsmaschine geeignet, auch bei einer hohen Taktzahl in einer effizienten Weise abseparierte Papieroder Kartonzuschnitte sicher auf die zu verpackenden Produkte bzw. auf die zu verpackende Produktgruppen zu übergeben.

Für den Mechanismus zum Antreiben des mindestens einen Greifkopfs in einer ungleichförmigen Bahnbewegung kommen verschiedene Realisierungen in Frage.

Gemäß der Erfindung ist in diesem Zusammenhang vorgesehen, dass der mindestens eine Greifkopf um eine Drehachse drehbar gelagert ist, und dass der dem mindestens einen Greifkopf zugeordnete Mechanismus ausgebildet ist, den mindestens einen Greifkopf in einer zykloidähnlichen oder zykloidförmigen Bahnbewegung anzutreiben. Die zykloidähnliche oder zykloidförmige Bahnbewegung ist derart gewählt, dass der mindestens eine Greifkopf je 360°-Umdrehung (um seine Drehachse) insgesamt drei sich wiederholende und aneinander angrenzende zykloidähnliche oder zykloidförmige Bahnstrecken durchläuft.

Insbesondere ist bei dieser Realisierung vorgesehen, dass der dem mindestens einen Greifkopf zugeordnete Mechanismus derart ausgebildet ist, dass dann, wenn sich der mindestens eine Greifkopf bei einem ersten Übergangspunkt zwischen einer ersten und einer zweiten zykloidähnlichen oder zykloidförmigen Bahnstrecke befindet, der mindestens eine Greifkopf an oder im Bereich der Verpackungszuführung angeordnet ist, und dass dann, wenn sich der mindestens eine Greifkopf bei einem zweiten Übergangspunkt zwischen einer dritten und der ersten zykloidähnlichen oder zykloidförmigen Bahnstrecke befindet, der mindestens eine Greifkopf an oder beim Übergabebereich angeordnet ist

Bei dieser Ausführungsvariante gemäß Erfindung liegt die Erkenntnis zu Grunde, dass eine ungleichförmige Bahnbewegung des mindestens einen Greifkopfs in Form einer zykloidförmigen Bahnbewegung bestehend aus drei zykloidförmigen Bahnstrecken den Vorteil mit sich bringt, dass die Bewegung des mindestens einen Greifkopfs verzögert ist, wenn sich der mindestens eine Greifkopf bei den entsprechenden Übergangspunkten zischen aneinander angrenzenden zykloidförmigen Bahnstrecken befindet.

Um eine solche zykloid Bahn des mindestens einen Greifkopfs zu realisieren, ist gemäß Ausführungsformen der vorliegenden Erfindung vorgesehen, dass der dem mindestens einen Greifkopf zugeordnete Mechanismus ein mit einer Antriebswelle antreibbares Getriebe, insbesondere Zahnradgetriebe, aufweist, mit welchem der mindestens eine Greifkopf derart wirkverbunden ist, dass sich der mindestens eine Greifkopf einerseits um seine Drehachse dreht und dass sich der mindestens eine Greifkopf andererseits um eine Wellenachse der Antriebswelle dreht. Vorzugsweise verläuft dabei die Drehachse des mindestens einen Greifkopfes parallel zu der Wellenachse der Antriebswelle und liegt außerhalb der Wellenachse. Insbesondere verläuft die Wellenachse senkrecht zu der Transportrichtung, in welcher die zu verpackenden Produkte oder die zu verpackenden Produktgruppen durch den Übergabebereich bewegt werden.

Hierbei handelt es sich um eine einfach zu realisierende mechanische Umsetzung, um die zykloidförmige Bahn des mindestens einen Greifkopfs realisieren zu können. Selbstverständlich kommen aber auch andere Ausführungsvarianten hierzu in Frage.

Vorzugsweise sollte die Wellenachse senkrecht zu der Transportrichtung verlaufen, in welcher die zu verpackenden Produkte oder die zu verpackenden Produktgruppen zumindest durch den Übergabebereich bewegt werden.

In einer Weiterbildung der zuletzt genannten Ausführungsform, bei welcher zur Realisierung einer zykloidförmigen Bahnbewegung des mindestens einen Greifkopfs ein mit einer Antriebswelle antreibbares Getriebe, insbesondere Zahnradgetriebe, zum Einsatz kommt, ist vorgesehen, dass das Getriebe, insbesondere Zahnradgetriebe, ausgebildet ist, den mindestens einen Drehkopf in einer ersten Drehrichtung um die Wellenachse gleichförmig und rotatorisch anzutreiben, und dass das Getriebe, insbesondere Zahnradgetriebe, ferner ausgebildet ist, den mindestens einen Greifkopf in einer zur ersten Drehrichtung entgegengesetzten zweiten Drehrichtung um die Drehachse des mindestens einen Greifkopfs gleichförmig und rotatorisch anzutreiben.

Die erste und zweite Drehrichtung können derart gewählt sein, dass der mindestens eine Greifkopf beim Übergang von der Verpackungszuführung zu dem Übergabebereich nur über eine einzige zykloidähnliche oder zykloidförmige Bahnstrecke bewegt wird, und dass sich der mindestens eine Greifkopf zumindest bereichsweise in der Richtung bewegt, in welcher die zu verpackenden Produkte oder die zu verpackenden Produktgruppen (5') durch den Übergabebereich (7) bewegt werden.

Dabei sollte vorzugsweise eine Drehfrequenz, mit welcher der mindestens eine Greifkopf um die Wellenachse rotatorisch angetrieben wird, und die Drehfrequenz, mit welcher der mindestens eine Greifkopf rotatorisch um die Drehachse angetrieben wird, vorzugsweise derart gewählt sein, dass sich der mindestens eine Greifkopf im Übergabebereich mit zumindest annähernd der gleichen Geschwindigkeit bewegt, wie die zu verpackenden Produkte oder die zu verpackenden Produktgruppen durch den Übergabebereich (7) bewegt werden.

Die Drehfrequenz, mit welcher der mindestens eine Greifkopf um die Wellenachse rotatorisch angetrieben wird, und/oder die Drehfrequenz, mit welcher der mindestens eine Greifkopf rotatorisch um die Drehachse angetrieben wird, sind/ist vorzugsweise einstellbar, um so die Taktfrequenz der Vereinzelungseinrichtung an die Taktfrequenz der anderen Komponenten der Verpackungsmaschine anpassen zu können.

Um die Drehfrequenz, mit welcher der mindestens eine Greifkopf um die Wellenachse rotatorisch angetrieben wird, und die Drehfrequenz, mit welcher der mindestens eine Greifkopf rotatorisch um die Drehachse angetrieben wird, entsprechend zu synchronisieren, bietet es sich in einer besonders leicht zu realisierenden aber dennoch effektiven Weise an, dass hierzu ein Zahnradgetriebe mit einem einzigen Antrieb zum Einsatz kommt.

Selbstverständlich wäre es aber auch denkbar, zwei separate Antriebe vorzusehen, die über eine entsprechende Regel- oder Steuereinrichtung miteinander synchronisiert sind.

Die Vereinzelungseinrichtung der erfindungsgemäßen Verpackungsmaschine bietet insbesondere zwei Ausführungsvarianten an, nämlich eine erste Ausführungsvariante, bei welcher die erste und zweite Drehrichtung derart gewählt sind, dass sich der mindestens eine Greifkopf beim Übergang von der Verpackungszuführung zu dem Übergabebereich zumindest bereichsweise in der Richtung bewegt, in welcher die zu verpackenden Produkte oder zu verpackenden Produktgruppen durch den Übergabebereich bewegt werden.

Alternativ hierzu ist es aber auch denkbar, dass die erste und zweite Drehrichtung derart gewählt sind, dass sich der mindestens eine Greifkopf beim Übergang von der Verpackungszuführung zu dem Übergabebereich zumindest bereichsweise entgegen der Richtung bewegt, in welcher die zu verpackenden Produkte oder die zu verpackenden Produktgruppen durch den Übergabebereich bewegt werden.

Beide dieser zuvor genannten Ausführungsalternativen haben - abhängig von dem verwendeten Material der Umverpackung - gewisse Vor- und Nachteile. Die erste Ausführungsvariante, bei welcher die erste und zweite Drehrichtung derart gewählt sind, dass sich der mindestens eine Greifkopf beim Übergang von der Verpackungszuführung zu dem Übergabereich zumindest bereichsweise in der Richtung bewegt, in welcher die zu verpackenden Produkte oder die zu verpackenden Produktgruppen durch den Übergabebereich bewegt werden, weist den Vorteil auf, dass bei der Übergabe der abseparierten Packmittelzuschnitte auf die zu verpackenden Produkte bzw. auf die zu verpackenden Produktgruppen die Packmittelzuschnitte in der gleichen Richtung mitbewegt werden, in welcher sich auch die zu verpackenden Produkte bzw. die zu verpackenden Produktgruppen bewegen. Von daher treten bei dieser Ausführungsform im Übergabebereich nur verhältnismäßig geringe aufgrund des Bernoulli-Effekts auftretende (strömungstechnische) Störungen auf, da sich in idealerweise die zu übergebenden Packmittelzuschnitte im Übergabebereich mit annähernd der gleichen Geschwindigkeit in der gleichen Richtung bewegen, wie die zu verpackenden Produkte bzw. die zu verpackenden Produktgruppen, auf welche die Packmittelzuschnitte abgelegt werden müssen.

Mit anderen Worten, die erste Ausführungsvariante, bei welcher der mindestens eine Greifkopf beim Übergang von der Verpackungszuführung zu dem Übergabebereich zumindest bereichsweise in der Transportrichtung der zu verpackenden Produkte bzw. der zu verpackenden Produktgruppen bewegt wird, eignet sich für besonders biegeschlaffe Umverpackungsmaterialien, wie beispielsweise Papiermaterialien.

Andererseits weist die zweite Ausführungsvariante, bei welcher der mindestens eine Greifkopf beim Übergang von der Verpackungszuführung zu dem Übergabebereich zumindest bereichsweise entgegen der Transportrichtung der zu verpackenden Produkte bzw. der zu verpackenden Produktgruppen bewegt wird, Vorteile auf, wenn es zwischen den einzelnen noch nicht abseparierten Packmittelzuschnitten in der Verpackungszuführung zu Hafterscheinungen kommt. In diesem Fall kann unter Umständen die Packmittelzuschnitt-Entnahme aus der Verpackungszuführung in einer Aufwärtsbewegung sinnvoll sein.

Um die mit der Vereinzelungseinrichtung erzielbare Taktzahl zu erhöhen, ist gemäß Ausführungsvarianten vorgesehen, dass der mindestens eine Greifkopf über einen Armbereich mit der Drehachse verbunden ist, wobei sich der Armbereich beidseitig über die Drehachse erstreckt und zwei gegenüberliegende Endbereiche aufweist, an denen jeweils mindestens ein Greifkopf angeordnet ist.

Bei dieser Ausführungsvariante können somit je Umdrehung des rotatorisch mit der Drehachse verbundenen Armbereichs zwei Papier- oder Kartonzuschnitte nacheinander absepariert werden.

Für den mindestens einen Greifkopf der Vereinzelungseinrichtung kommen unterschiedliche Ausführungsvarianten in Frage.

Gemäß einer Realisierung ist der mindestens eine Greifkopf vorzugsweise als Vakuumgreifer ausgebildet. Hierbei handelt es sich um einen Sauggreifer, der einen flexiblen Saugnapf aufweisen kann, welcher einen an eine Unterdruckquelle anschließbaren Saugraum begrenzt und einen eine Saugöffnung umgrenzenden vorderen Endbereich sowie einen gegenüberliegenden hinteren Endbereich aufweist. Die Saugöffnung des Saugnapfs ist in der Regel mit einer Dichtlippe gebildet, die an der Oberfläche des zu handhabenden Umverpackungszuschnitts anliegt bzw. anlegbar ist und dann zwischen dem Saugnapf und der Oberfläche des Umverpackungsmaterialzuschnitts einen Saugraum umschließt, welcher entsprechend evakuiert werden kann. Dann legt sich der Saugnapf dicht an die Oberfläche des Umverpackungsmaterialzuschnitts an und hält diesen pneumatisch fest.

Selbstverständlich kommen aber auch andere Ausführungen für den mindestens einen Greifkopf in Frage, wie beispielsweise mechanisch arbeitende Greiffinger etc.

Grundsätzlich ist es unabhängig von der Realisierung des mindestens einen Greifkopfs von Vorteil, dass bei der Bewegung des mindestens einen Greifkopfs auf der Umlaufbahn zwischen der Verpackungszuführung und dem Übergabebereich ein Greifbereich des mindestens einen Greifkopfs vorzugsweise durchgehend im Hinblick auf die Umlaufbahn radial nach außen zeigt.

Auf diese Weise ist sichergestellt, dass der Greifkopf und insbesondere der Greifbereich des Greifkopfs stets im Hinblick auf die abzuseparierenden Papier- oder Kartonzuschnitte einerseits und im Hinblick auf die mit den abseparierten Papieroder Kartonzuschnitten zu bestückenden Produkten bzw. Produktgruppen andererseits geeignet ausgerichtet ist.

Gemäß Realisierungen der erfindungsgemäßen Verpackungsmaschine weist diese mindestens ein Transport- oder Förderban auf zum Transportieren der zu verpackenden Produkte oder der zu verpackenden Produktgruppen zumindest durch den Übergabebereich der Vereinzelungseinrichtung, wobei - in Transportrichtung der zu verpackenden Produkte oder der zu verpackenden Produktgruppen gesehen - stromabwärts des Übergabebereichs eine Falteinrichtung vorgesehen ist zum Falten der auf die Produkte oder Produktgruppen abgelegten Papier- oder Kartonzuschnitte derart, dass vorzugsweise vollständig mit dem Papier- oder Kartonmaterial umhüllte Produkte oder Produktgruppen gebildet werden.

Für die Falteinrichtung kommen unterschiedliche Ausführungsformen in Frage.

Gemäß Ausführungsvarianten der erfindungsgemäßen Verpackungsmaschine ist der Falteinrichtung mindestens ein Transport- oder Förderband zugeordnet zum Fördern der zu verpackenden Produkte oder Produktgruppen durch die Falteinrichtung, wobei die Falteinrichtung eine Vielzahl von - in Transportrichtung der zu verpackenden Produkte oder Produktgruppen gesehen - hintereinander angeordnete Faltstationen aufweist, in denen beim Transport der zu verpackenden Produkte oder Produktgruppen durch die Falteinrichtung die Papier- oder Packmittelzuschnitte sequenziell um die Produkte oder Produktgruppen gefaltet werden.

Alternativ oder zusätzlich hierzu ist es denkbar, dass die Falteinrichtung insbesondere auf einer umlaufenden Kette geführte Faltarme aufweist, welche in einemin Transportrichtung der Produkte oder Produktgruppen gesehen - stromaufwärtigen Endbereich der Falteinrichtung von oben auf die Produkte oder Produktgruppen gesetzt und mit den Produkten oder Produktgruppen bewegt werden zum zumindest bereichsweise Umfalten der auf die Produkte oder Produktgruppen gelegten Papier- oder Kartonzuschnitte.

Selbstverständlich kommen aber auch andere Ausführungsformen zum Umfalten der auf die Produkte oder Produktgruppen gelegten Papier- oder Kartonzuschnitte in Frage.

Um auch die Unterseite der Produkte oder Produktgruppen in einer besonders effektiven Weise mit dem Umverpackungsmaterial umfalten zu können, ist gemäß Ausführungsformen der Erfindung vorgesehen, dass zumindest in einem - in Transportrichtung der zu verpackenden Produkte oder Produktgruppen gesehen - stromabwärtigen Endbereich der Falteinrichtung zwei gegenüberliegende und jeweils seitlich an die Produkte oder Produktgruppen angreifende Förderbänder vorgesehen sind, welche in Transportrichtung der Produkte oder Produktgruppen gesehen in Richtung der Horizontalen geneigt sind, vorzugsweise um mindestens zwei Grad und noch bevorzugter um mindestens fünf Grad.

Im Hinblick auf die Verpackungsmaschine ist es ferner denkbar, dass die Verpackungsmaschine - in Transportrichtung der zu verpackenden Produkte oder Produktgruppen gesehen - stromaufwärts der Vereinzelungseinrichtung eine Gruppiereinrichtung aufweist zum bedarfsweisen und insbesondere automatischen Gruppieren mehrerer Produkte, d.h. zum Ausbilden von Produktgruppen.

Die Erfindung betrifft ferner ein Verfahren zum Verpacken von Produkten oder Produktgruppen in insbesondere Papiermaterial oder dünnem Kartonmaterial.

Bei dem erfindungsgemäßen Verfahren werden flache Papier- oder Kartonzuschnitte zugeführt. Anschließend werden die zugeführten Papier- oder Kartonzuschnitte einzeln absepariert und dann werden die abseparierten Papier- oder Kartonzuschnitte auf ein zu verpackendes Produkt oder ein zu verpackende Produktgruppe übergeben.

Zum Abseparieren der zugeführten Papier- oder Kartonzuschnitte und zum Übergeben der abseparierten Papier- oder Kartonzuschnitte auf ein zu verpackendes Produkt oder eine zu verpackende Produktgruppe wird mindestens ein Greifkopf kontinuierlich auf einer Umlaufbahn zwischen einer Verpackungszuführung und einem Übergabebereich, in welchem die einzelnen Papier- oder Kartonzuschnitte von dem mindestens einen Greifkopf auf das zu verpackende Produkt oder auf die zu verpackende Produktgruppe übergeben werden, bewegt. Hierzu wird der mindestens eine Greifkopf in einer ungleichförmigen Bahnbewegung derart angetrieben, dass der mindestens eine Greifkopf im Bereich der Verpackungszuführung und im Übergabebereich langsamer bewegt wird als beim Übergang des mindestens einen Greifkopfs von der Verpackungszuführung zu dem Übergabebereich.

Mit dem erfindungsgemäßen Verpackungsverfahren sind die zuvor im Zusammenhang mit der erfindungsgemäßen Verpackungsmaschine erzielbaren Vorteile ebenfalls realisierbar.

Im Unterschied zu einer gleichförmigen Bewegung, bei welcher ein Körper, wie beispielsweise der mindestens eine Greifkopf, mit gleichbleibender Geschwindigkeit und ohne Richtungsänderung bewegt wird, legt bei einer ungleichförmigen Bewegung ein Körper in gleichen Zeitabständen verschieden große Strecken zurück. Mit anderen Worten, bei einer ungleichförmigen Bewegung ändert sich die Geschwindigkeit des Körpers.

Nachfolgend wird unter Bezugnahme auf die beiliegenden Zeichnungen eine exemplarischen Ausführungsform der erfindungsgemäßen Verpackungsmaschine näher beschrieben.

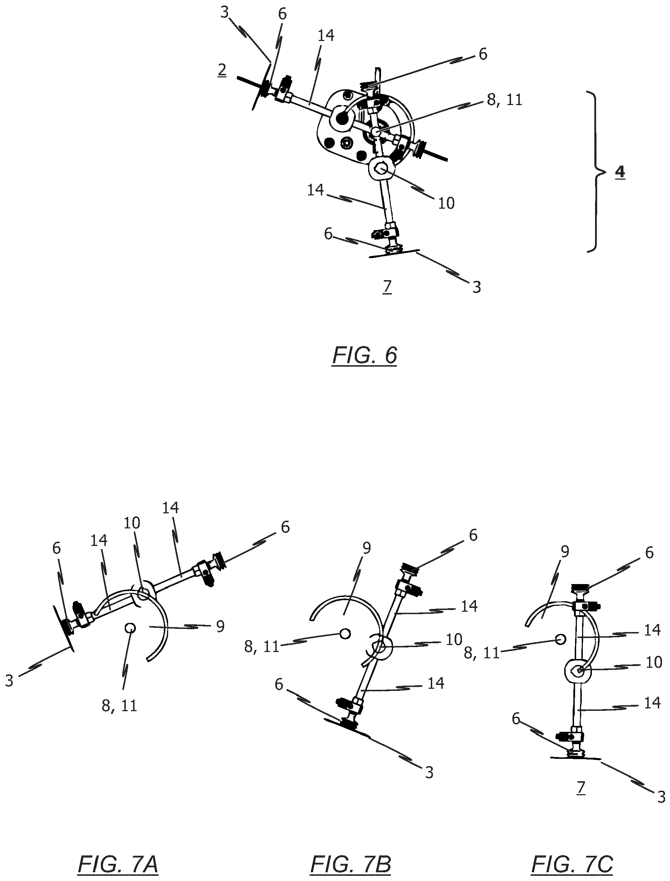

Es zeigen:
- FIG. 1: schematisch und in einer isometrischen Ansicht eine exemplarische Ausführungsform der erfindungsgemäßen Verpackungsmaschine;
- FIG. 2: schematisch und in einer isometrischen Ansicht die bei der Verpackungsmaschine gemäß FIG. 1 zum Einsatz kommende Gruppierei nrichtu ng;
- FIG. 3: schematisch und in einer isometrischen Ansicht die bei der Verpackungsmaschine gemäß FIG. 1 zum Einsatz kommende Vereinzelungseinrichtung;
- FIG. 4: schematisch und in einer isometrischen Ansicht einen Bereich der bei der Verpackungsmaschine gemäß FIG. 1 zum Einsatz kommenden Falteinrichtung;
- FIG. 5: schematisch und in einer isometrischen Ansicht einen Bereich der bei der Verpackungsmaschine gemäß FIG. 1 zum Einsatz kommenden Falteinrichtung;
- FIG. 6: schematisch eine exemplarische Ausführungsform gemäß
- Erfindung: einer Vereinzelungseinrichtung zum einzelnen Abseparieren von zugeführten Papier- oder Kartonzuschnitten und zum Übergeben der abseparierten Papier- oder Kartonzuschnitte auf ein zu verpackendes Produkt oder eine zu verpackende Produktgruppe, wobei in FIG. 6 der mindestens eine Greifkopf der Vereinzelungseinrichtung sowohl in seiner Position zum Abseparieren der zugeführten Papier- oder Kartonzuschnitte als auch in seiner Position zum Übergeben der abseparierten Papier- oder Kartonzuschnitte auf ein zu verpackendes Produkt oder eine zu verpackende Produktgruppe gezeigt ist; und
- FIG. 7A - 7C: ein Bewegungsablauf des mindestens einen Greifkopfs der Vereinzelungseinrichtung gemäß FIG. 6 beim Übergang des mindestens einen Greifkopfs von einer Verpackungszuführung zu einem Übergabebereich.

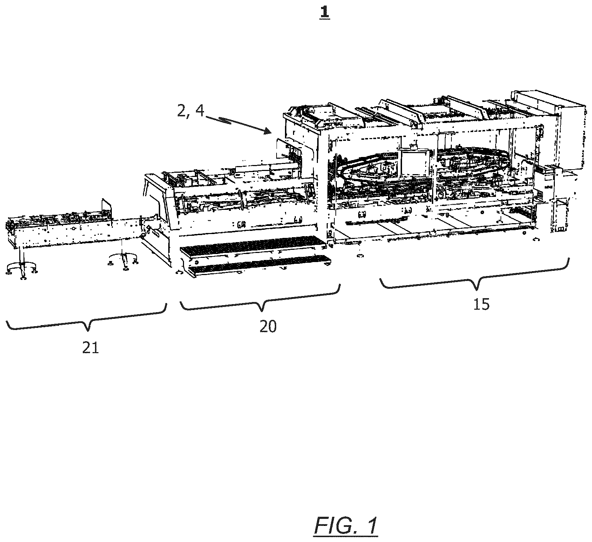

FIG. 1 zeigt schematisch und in einer isometrischen Ansicht ein Ausführungsbeispiel der erfindungsgemäßen Verpackungsmaschine 1. Die Verpackungsmaschine 1 der dargestellten Ausführungsform dient dazu, Erstverpackungen, d.h. bereits verpackte Produkte 5, in ein Umverpackungsmaterial einzuschlagen.

Die einzelnen Produkte 5 werden zunächst der Verpackungsmaschine 1 zugeführt und ggf. in einem Speichertisch 21 oder in einem Magazin zwischengespeichert.

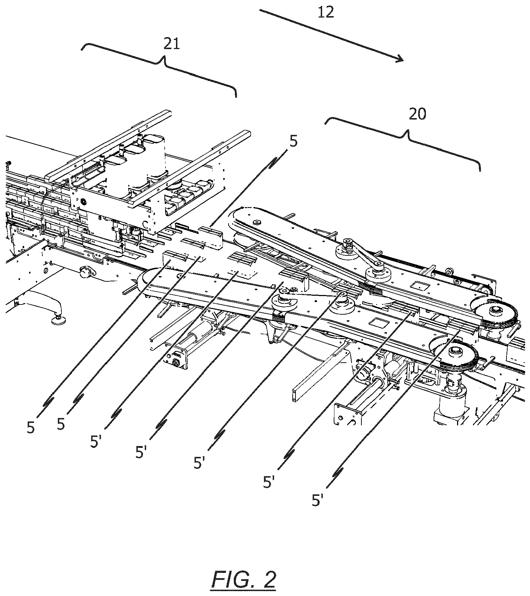

Wie es insbesondere der Darstellung in FIG. 2 entnommen werden kann, ist bei der exemplarischen Ausführungsform der erfindungsgemäßen Verpackungsmaschine 1 vorgesehen, dass der Speichertisch 21 bzw. das Magazin mehrere parallel verlaufende Linien aufweist, in denen die einzelnen Produkte 5 zugeführt werden.

Am stromabwärtigen Endbereich des Speichertischs 21 bzw. Magazins werden aus den einzelnen Linien des Speichertischs 21 pro Zeiteinheit eine vorab festgelegte oder festlegbare Anzahl an Produkten 5 entnommen und mit Hilfe einer nachgeschalteten Gruppiereinrichtung 20 gruppiert. Die Gruppiereinrichtung 20 dient somit dazu, Produktgruppen zusammenzustellen, welche anschließend mit dem Umverpackungsmaterial umhüllt werden, um so ein entsprechendes Gebinde auszubilden.

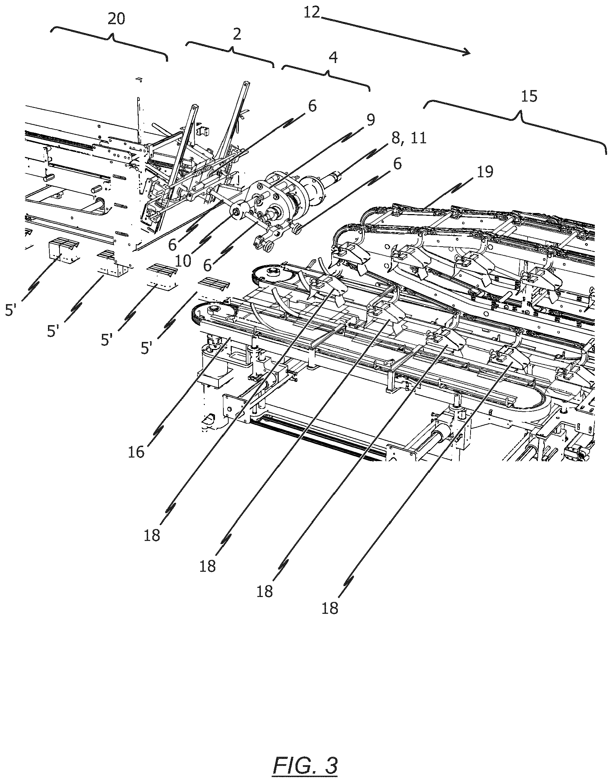

Die in der Gruppiereinrichtung 20 gebildeten Produktgruppen werden mit Hilfe eines Förderbands anschließend der Umverpackungseinrichtung der Verpackungsmaschine 1 zugeführt. Wie es der isometrischen Ansicht in FIG. 3 entnommen werden kann, weist die Umverpackungseinrichtung der Verpackungsmaschine 1 eine Verpackungszuführung 2 auf, mit welcher flache Papier- oder Kartonzuschnitte 3 zugeführt werden.

Vorzugsweise bestehen die Zuschnitte 3 aus Papier oder aus dünner Pappe. Die Zuschnitte 3 können ggf. laminiert sein. Üblicherweise weisen die Zuschnitte 3 mehrere Faltlinien auf, die das Falten des Zuschnitts 3 erleichtern sollen und den Zuschnitt 3 in mehrere Flächen aufteilen.

Der Darstellung in FIG. 3 ist zusätzlich zu entnehmen, dass die Umverpackungseinrichtung der exemplarischen Verpackungsmaschine 1 ferner eine Vereinzelungseinrichtung 4 aufweist. Der Vereinzelungseinrichtung 4 kommt dabei eine Doppelfunktion zu:
Zum einen dient die Vereinzelungseinrichtung 4 dazu, die mit Hilfe der Verpackungszuführung 2 zugeführten flachen Papier- oder Kartonzuschnitte 3 einzeln abzuseparieren. Zum anderen dient die Vereinzelungseinrichtung 4 auch zum Übergeben der abseparierten Papier- oder Kartonzuschnitte 3 auf ein zu verpackendes Produkt bzw. eine zu verpackende Produktgruppe 5'.

Wie es der Darstellung in FIG. 3 ferner entnommen werden kann, weist die Vereinzelungseinrichtung 4 mindestens einen Greifkopf 6 auf, welcher insbesondere als Vakuumgreifer ausgebildet sein kann.

Dem mindestens einen Greifkopf 6 ist ein Mechanismus zugeordnet zum vorzugsweise kontinuierlichen Bewegen des mindestens einen Greifkopfs 6 auf einer Umlaufbahn zwischen der Verpackungszuführung 2 und einem Übergabebereich 7, in welchem die einzelnen Papier- oder Kartonzuschnitte 3 von dem mindestens einen Greifkopf 6 auf das zu verpackende Produkt oder die zu verpackende Produktgruppe 5' übergeben werden.

Die Funktionsweise der Vereinzelungseinrichtung 4 bzw. des dem mindestens einen Greifkopf 6 zugeordneten Mechanismus ist in FIG. 6 und in der in FIG. 7A bis FIG. 7C gezeigten Ablaufsequenz ersichtlich.

Kurz zusammengefasst weist bei der in den Zeichnungen gezeigten exemplarischen Ausführungsform der dem mindestens einen Greifkopf 6 zugeordnete Mechanismus eine mit einer Antriebswelle 8 antreibbares Getriebe, insbesondere Zahnradgetriebe 9, auf, mit welchem der mindestens eine Greifkopf 6 derart wirkverbunden ist, dass sich der mindestens eine Greifkopf 6 einerseits um seine Drehachse 10 dreht und dass sich der mindestens eine Greifkopf 6 andererseits um eine Wellenachse 11 der Antriebswelle 8 dreht, wobei die Drehachse 10 des mindestens einen Greifkopfes 6 parallel zu der Wellenachse 11 der Antriebswelle 8 verläuft und außerhalb der Wellenachse 11 liegt.

Der isometrischen Ansicht in FIG. 3 ist zu entnehmen, dass die Wellenachse 11 vorzugsweise senkrecht zu der Transportrichtung 12 verläuft, in welcher die zu verpackenden Produkte 5 oder die zu verpackenden Produktgruppen 5' durch den Übergabebereich 7 bewegt werden.

Dem in FIG. 7A bis FIG. 7C gezeigten Bewegungsablauf des mindestens einen Greifkopfs 6 ist zu entnehmen, dass das Getriebe, insbesondere Zahnradgetriebe 9, ausgebildet ist, den mindestens einen Greifkopf 6 in einer ersten Drehrichtung um die Wellenachse 11 gleichförmig und rotatorisch anzutreiben, wobei das Getriebe, insbesondere Zahnradgetriebe 9, ferner ausgebildet ist, den mindestens einen Greifkopf 6 in einer zur ersten Drehrichtung entgegengesetzten zweiten Drehrichtung um die Drehachse 10 des mindestens einen Greifkopfs 6 gleichförmig und rotatorisch anzutreiben.

Bei der exemplarischen Ausführungsform der erfindungsgemäßen Verpackungsmaschine 1 zum Einsatz kommenden Vereinzelungseinrichtung 4 ist vorgesehen, dass der mindestens eine Greifkopf 6 über einen Armbereich 14 mit der Drehachse 10 verbunden ist, wobei sich der Armbereich 14 beidseitig über die Drehachse 10 erstreckt und zwei gegenüberliegende Endbereiche aufweist, an denen jeweils mindestens ein Greifkopf 6 angeordnet ist.

Darüber hinaus ist bei der in den Zeichnungen gezeigten Realisierung der erfindungsgemäßen Verpackungsmaschine 1 vorgesehen, dass der Greifbereich des mindestens einen Greifkopfs 6, der vorzugsweise als Vakuumgreifer ausgebildet ist, bei der Bewegung des mindestens einen Greifkopfs 6 auf der Umlaufbahn zwischen der Verpackungszuführung 2 und dem Übergabebereich 7 vorzugsweise durchgehend im Hinblick auf die Umlaufbahn radial nach außen zeigt.

Der zuvor beschriebene Mechanismus, welcher dem mindestens einen Greifkopf 6 der Vereinzelungseinrichtung 4 zugeordnet ist, und welcher dazu dient, den mindestens einen Greifkopf 6 vorzugsweise kontinuierlich auf einer Umlaufbahn zwischen der Verpackungszuführung 2 und dem Übergabebereich 7, in welchem die einzelnen Papier- oder Kartonzuschnitte 3 von dem mindestens einen Greifkopf 6 auf das zu verpackende Produkt oder auf die zu verpackende Produktgruppe 5' übergeben werden, zu bewegen, dient insbesondere dazu, den mindestens einen Greifkopf 6 in einer zykloidförmigen Bahnbewegung anzutreiben.

Im Einzelnen wird der Greifkopf 6 in einer zykloidähnlichen oder zykloidförmigen Bahnbewegung angetrieben, wobei die zykloidähnliche oder zykloidförmige Bahnbewegung derart gewählt ist, dass der Greifkopf 6 je 360°-Umdrehung insgesamt drei sich wiederholende und aneinander angrenzende zykloidähnliche oder zykloidförmige Bahnstrecken durchläuft.

Dabei ist der dem Greifkopf 6 zugeordnete Mechanismus derart ausgebildet, dass dann, wenn sich der Greifkopf 6 bei einem ersten Übergangspunkt zwischen einer ersten und einer zweiten zykloidähnlichen oder zykloidförmigen Bahnstrecke befindet, der Greifkopf 6 an oder im Bereich der Verpackungszuführung 2 angeordnet ist, und dass dann, wenn sich der Greifkopf 6 bei einem zweiten Übergangspunkt zwischen einer dritten und der ersten zykloidähnlichen oder zykloidförmigen Bahnstrecke befindet, der Greifkopf 6 an oder beim Übergabebereich 7 angeordnet ist.

Die Stellung des mindestens einen Greifkopfs 6 in den beiden Übergangspunkten zwischen den zykloidähnlichen oder zykloidförmigen Bahnstrecken ist in FIG. 6 gezeigt.

Allgemein ausgedrückt dient der dem mindestens einen Greifkopf 6 zugeordnete Mechanismus somit dazu, den mindestens einen Greifkopf 6 in einer ungleichförmigen Bahnbewegung derart anzutreiben, dass der mindestens eine Greifkopf 6 im Bereich der Verpackungszuführung 2 und im Übergabebereich 7 langsamer bewegt wird als beim Übergang des mindestens einen Greifkopfs 6 von der Verpackungszuführung 2 zu dem Übergabebereich 7.

Gemäß vorteilhaften Ausführungsformen der Vereinzelungseinrichtung 4 ist vorgesehen, dass das Getriebe, insbesondere Zahnradgetriebe 9, ausgebildet ist, den Greifkopf 6 in einer ersten Drehrichtung um die Wellenachse 11 gleichförmig und rotatorisch anzutreiben, wobei das Getriebe, insbesondere Zahnradgetriebe 9, ferner ausgebildet ist, den Greifkopf 6 in einer zur ersten Drehrichtung entgegengesetzten zweiten Drehrichtung um die Drehachse 10 des Greifkopfs 6 gleichförmig und rotatorisch anzutreiben.

Die erste und zweite Drehrichtung können derart gewählt sein, dass der Greifkopf 6 beim Übergang von der Verpackungszuführung 2 zu dem Übergabebereich 7 nur über eine einzige zykloidähnliche oder zykloidförmige Bahnstrecke bewegt wird, und dass sich der Greifkopf 6 zumindest bereichsweise in der Richtung bewegt, in welcher die zu verpackenden Produkte 5 oder die zu verpackenden Produktgruppen 5' durch den Übergabebereich 7 bewegt werden, wobei eine Drehfrequenz, mit welcher der mindestens eine Greifkopf 6 um die Wellenachse 11 rotatorisch angetrieben wird, und die Drehfrequenz, mit welcher der mindestens eine Greifkopf 6 rotatorisch um die Drehachse 10 angetrieben wird, vorzugsweise derart gewählt sind, dass sich der mindestens eine Greifkopf 6 im Übergabebereich 7 mit zumindest annähernd der gleichen Geschwindigkeit bewegt, wie die zu verpackenden Produkte oder die zu verpackenden Produktgruppen 5' durch den Übergabebereich 7 bewegt werden.

Alternativ hierzu ist es aber auch grundsätzlich denkbar, dass die erste und zweite Drehrichtung derart gewählt sind, dass der Greifkopf 6 beim Übergang von der Verpackungszuführung 2 zu dem Übergabebereich 7 über insgesamt zwei zykloidähnliche oder zykloidförmige Bahnstrecken bewegt wird, und dass sich der Greifkopf 6 zumindest bereichsweise entgegengesetzt der Richtung bewegt, in welcher die zu verpackenden Produkte 5 oder die zu verpackenden Produktgruppen 5' durch den Übergabebereich 7 bewegt werden.

Obgleich in den Zeichnungen nicht explizit gezeigt, weist die exemplarische Ausführungsform der erfindungsgemäßen Verpackungsmaschine 1 mindestens ein Transportband auf, um die zu verpackenden Produkte 5 bzw. die zu verpackenden Produktgruppen 5' zumindest durch den Übergabebereich 7 der Vereinzelungseinrichtung 4 zu transportieren.

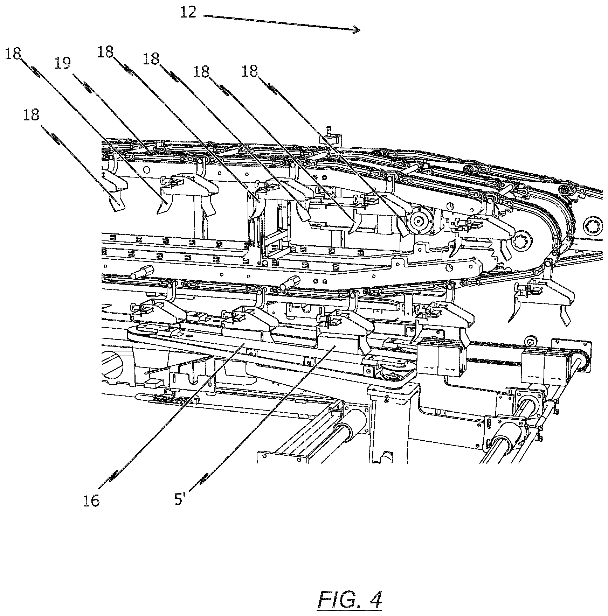

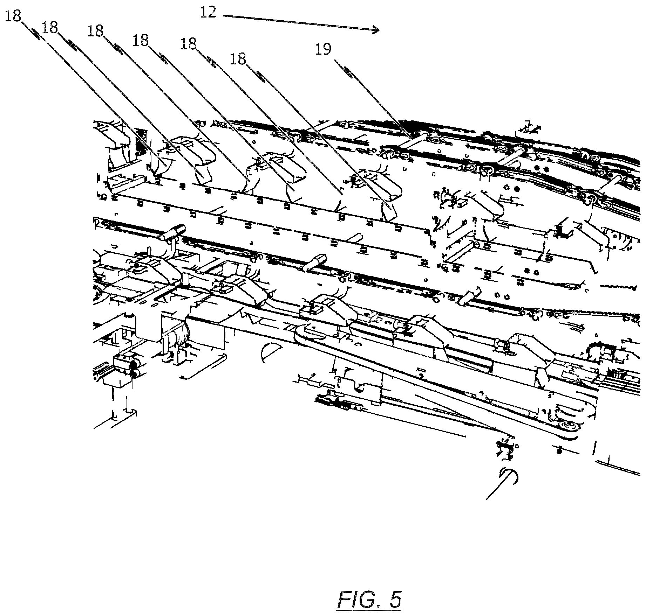

Wie es der Übersichtsansicht gemäß FIG. 1 und den Detailansichten gemäß FIG. 4 und FIG. 5 entnommen werden kann, ist - in Transportrichtung 12 der zu verpackenden Produkte 5 oder der zu verpackenden Produktgruppen 5' gesehen - stromabwärts des Übergabebereichs eine Falteinrichtung 15 vorgesehen, um die auf die Produkte 5 oder Produktgruppen 5' abgelegten Papier- oder Kartonzuschnitte 3 derart zu falten, dass vorzugsweise vollständig mit dem Papier- oder Kartonmaterial umhüllte Produkte 5 oder Produktgruppen 5' gebildet werden.

Hierzu kann der Falteinrichtung 15 mindestens ein Förderband 16 zugeordnet sein, um die zu verpackenden Produkte 5 oder Produktgruppen 5' durch die Falteinrichtung 15 zu fördern. Vorzugsweise weist die Falteinrichtung 15 eine Vielzahl von - in Transportrichtung 12 der zu verpackenden Produkte 5 oder Produktgruppen 5' gesehen - hintereinander angeordnete Faltstationen auf, in denen beim Transport der zu verpackenden Produkte 5 oder Produktgruppen 5' durch die Falteinrichtung 15 die Papier- oder Packmittelzuschnitte sequenziell um die Produkte 5 oder Produktgruppen 5' gefaltet werden.

Die Falteinrichtung 15 weist ferner auf einer umlaufenden Kette 19 geführte Faltarme 18 auf, welche in einem - in Transportrichtung 12 der Produkte 5 oder Produktgruppen 5' gesehen - stromaufwärtigen Endbereich der Falteinrichtung 15 von oben auf die Produkte 5 oder Produktgruppen 5' gesetzt und mit den Produkten 5 oder Produktgruppen 5' bewegt werden zum zumindest bereichsweisen Umfalten der auf die Produkte 5 oder Produktgruppen 5' gelegten Papier- oder Kartonzuschnitte 3.

Der Darstellung in FIG. 5 ist insbesondere zu entnehmen, dass in einem - in Transportrichtung 12 der zu verpackenden Produkte 5 oder Produktgruppen 5' gesehen - stromabwärtigen Endbereich der Falteinrichtung 15 zwei gegenüberliegende und jeweils seitlich an die Produkte 5 oder Produktgruppen 5' angreifende Förderbänder 16 vorgesehen sind, welche - in Transportrichtung 12 der Produkte 5 oder Produktgruppen 5' gesehen - vorzugsweise um mindestens zwei Grad und noch bevorzugter um mindestens fünf Grad in Richtung der Horizontalen geneigt sind.

Die Erfindung ist nicht auf die in den Zeichnungen gezeigte exemplarische Verpackungsmaschine 1 beschränkt, sondern ergibt sich aus der Merkmalskombination der jeweiligen Ansprüche 1 und 10.

### Bezugszeichenliste

- 1: Verpackungsmaschine
- 2: Verpackungszuführung
- 3: Papier- oder Kartonzuschnitte
- 4: Vereinzelungseinrichtung
- 5: Produkt
- 5': Produktgruppe
- 6: Greifkopf
- 7: Übergabebereich
- 8: Antriebswelle
- 9: Getriebe
- 10: Drehachse des Greifkopfs
- 11: Wellenachse der Antriebswelle
- 12: Transportrichtung
- 14: Armbereich
- 15: Falteinrichtung
- 16: Förderband
- 18: Faltarm
- 19: umlaufende Kette
- 20: Gruppiereinrichtung
- 21: Speichertisch/Magazin

## Patentansprüche

1. Verpackungsmaschine (1) zum Verpacken von Produkten (5) oder Produktgruppen (5') in insbesondere Papiermaterial oder dünnem Kartonmaterial, wobei die Verpackungsmaschine (1) folgendes aufweist:
- eine Verpackungszuführung (2) zum Zuführen von flachen Papier- oder Kartonzuschnitten (3); und
- eine Vereinzelungseinrichtung (4) zum einzelnen Abseparieren der zugeführten Papier- oder Kartonzuschnitte (3) und zum Übergeben der abseparierten Papier- oder Kartonzuschnitte (3) auf ein zu verpackendes Produkt (5) oder eine zu verpackende Produktgruppe (5'),
wobei die Vereinzelungseinrichtung (4) mindestens einen Greifkopf (6) und vorzugsweise genau zwei einander gegenüberliegende Greifköpfe (6) und einen dem mindestens einen Greifkopf (6) zugeordneten Mechanismus aufweist zum vorzugsweise kontinuierlichen Bewegen des mindestens einen Greifkopfs (6) auf einer Umlaufbahn zwischen der Verpackungszuführung (2) und einem Übergabebereich (7), in welchem die einzelnen Papier- oder Kartonzuschnitte (3) von dem mindestens einen Greifkopf (6) auf das zu verpackende Produkt (5) oder auf die zu verpackende Produktgruppe (5') übergeben werden, wobei der dem mindestens einen Greifkopf (6) zugeordnete Mechanismus ausgebildet ist, den mindestens einen Greifkopf (6) in einer ungleichförmigen Bahnbewegung derart anzutreiben, dass der mindestens eine Greifkopf (6) im Bereich der Verpackungszuführung (2) und im Übergabebereich (7) langsamer bewegt wird als beim Übergang des mindestens einen Greifkopfs (6) von der Verpackungszuführung (2) zu dem Übergabebereich (7),
**dadurch gekennzeichnet, dass**
der mindestens eine Greifkopf (6) um eine Drehachse (10) drehbar gelagert ist, und wobei der dem mindestens einen Greifkopf (6) zugeordnete Mechanismus ausgebildet ist, den mindestens einen Greifkopf (6) in einer zykloidähnlichen oder zykloidförmigen Bahnbewegung anzutreiben, wobei die zykloidähnliche oder zykloidförmige Bahnbewegung derart gewählt ist, dass der mindestens eine Greifkopf (6) je 360°-Umdrehung insgesamt drei sich wiederholende und aneinander angrenzende zykloidähnliche oder zykloidförmige Bahnstrecken durchläuft.

2. Verpackungsmaschine (1) nach Anspruch 1,
wobei der dem mindestens einen Greifkopf (6) zugeordnete Mechanismus derart ausgebildet ist, dass dann, wenn sich der mindestens eine Greifkopf (6) bei einem ersten Übergangspunkt zwischen einer ersten und einer zweiten zykloidähnlichen oder zykloidförmigen Bahnstrecke befindet, der mindestens eine Greifkopf (6) an oder im Bereich der Verpackungszuführung (2) angeordnet ist, und dass dann, wenn sich der mindestens eine Greifkopf (6) bei einem zweiten Übergangspunkt zwischen einer dritten und der ersten zykloidähnlichen oder zykloidförmigen Bahnstrecke befindet, der mindestens eine Greifkopf (6) an oder beim Übergabebereich (7) angeordnet ist.

3. Verpackungsmaschine (1) nach Anspruch 1 oder 2,
wobei der dem mindestens einen Greifkopf (6) zugeordnete Mechanismus ein mit einer Antriebswelle (8) antreibbares Getriebe, insbesondere Zahnradgetriebe (9), aufweist, mit welchem der mindestens eine Greifkopf (6) derart wirkverbunden ist, dass sich der mindestens eine Greifkopf (6) einerseits um seine Drehachse (10) dreht und dass sich der mindestens eine Greifkopf (6) andererseits um eine Wellenachse (11) der Antriebswelle (8) dreht, wobei die Drehachse (10) des mindestens einen Greifkopfes (6) parallel zu der Wellenachse (11) der Antriebswelle (8) verläuft und außerhalb der Wellenachse (11) liegt, und wobei die Wellenachse (11) vorzugsweise senkrecht zu der Transportrichtung (12) verläuft, in welcher die zu verpackenden Produkte (5) oder die zu verpackenden Produktgruppen (5') durch den Übergabebereich (7) bewegt werden.

4. Verpackungsmaschine (1) nach Anspruch 3,
wobei das Getriebe, insbesondere Zahnradgetriebe (9), ausgebildet ist, den mindestens einen Greifkopf (6) in einer ersten Drehrichtung um die Wellenachse (11) gleichförmig und rotatorisch anzutreiben, und wobei das Getriebe, insbesondere Zahnradgetriebe (9), ferner ausgebildet ist, den mindestens einen Greifkopf (6) in einer zur ersten Drehrichtung entgegengesetzten zweiten Drehrichtung um die Drehachse (10) des mindestens einen Greifkopfs (6) gleichförmig und rotatorisch anzutreiben.

5. Verpackungsmaschine (1) nach Anspruch 4,
wobei die erste und zweite Drehrichtung derart gewählt sind, dass der mindestens eine Greifkopf (6) beim Übergang von der Verpackungszuführung (2) zu dem Übergabebereich (7) nur über eine einzige zykloidähnliche oder zykloidförmige Bahnstrecke bewegt wird, und dass sich der mindestens eine Greifkopf (6) zumindest bereichsweise in der Richtung bewegt, in welcher die zu verpackenden Produkte (5) oder die zu verpackenden Produktgruppen (5') durch den Übergabebereich (7) bewegt werden, wobei eine Drehfrequenz, mit welcher der mindestens eine Greifkopf (6) um die Wellenachse (11) rotatorisch angetrieben wird, und die Drehfrequenz, mit welcher der mindestens eine Greifkopf (6) rotatorisch um die Drehachse (10) angetrieben wird, vorzugsweise derart gewählt sind, dass sich der mindestens eine Greifkopf (6) im Übergabebereich (7) mit zumindest annähernd der gleichen Geschwindigkeit bewegt, wie die zu verpackenden Produkte (5) oder die zu verpackenden Produktgruppen (5') durch den Übergabebereich (7) bewegt werden.

6. Verpackungsmaschine (1) nach Anspruch 4,
wobei die erste und zweite Drehrichtung derart gewählt sind, dass der mindestens eine Greifkopf (6) beim Übergang von der Verpackungszuführung (2) zu dem Übergabebereich (7) über insgesamt zwei zykloidähnliche oder zykloidförmige Bahnstrecken bewegt wird, und dass sich der mindestens eine Greifkopf (6) zumindest bereichsweise entgegengesetzt der Richtung bewegt, in welcher die zu verpackenden Produkte (5) oder die zu verpackenden Produktgruppen (5') durch den Übergabebereich (7) bewegt werden.

7. Verpackungsmaschine (1) nach einem der Ansprüche 3 bis 6,
wobei eine Drehfrequenz, mit welcher der mindestens eine Greifkopf (6) um die Wellenachse (11) rotatorisch angetrieben wird, vorzugsweise einstellbar ist und insbesondere mit der Drehfrequenz übereinstimmt, mit welcher der mindestens eine Greifkopf (6) rotatorisch um die Drehachse (10) angetrieben wird.

8. Verpackungsmaschine (1) nach einem der Ansprüche 3 bis 7,
wobei der mindestens eine Greifkopf (6) über einen Armbereich (14) mit der Drehachse (10) verbunden ist, und wobei sich der Armbereich (14) beidseitig über die Drehachse (10) erstreckt und zwei gegenüberliegende Endbereiche aufweist, an denen jeweils mindestens ein Greifkopf (6) angeordnet ist.

9. Verpackungsmaschine (1) nach einem der Ansprüche 1 bis 8,
wobei der mindestens eine Greifkopf (6) vorzugsweise als Vakuumgreifer ausgebildet ist, und wobei bei der Bewegung des mindestens einen Greifkopfs (6) auf der Umlaufbahn zwischen der Verpackungszuführung (2) und dem Übergabebereich (7) ein Greifbereich des mindestens einen Greifkopfs (6) vorzugsweise durchgehend im Hinblick auf die Umlaufbahn radial nach außen zeigt.

10. Verfahren zum Verpacken von Produkten (5) oder Produktgruppen (5') in insbesondere Papiermaterial oder dünnem Kartonmaterial, wobei das Verfahren folgende Verfahrensschritte aufweist:
- Bereitstellen einer Verpackungsmaschine nach einem der Ansprüche 1 bis 9;
- Zuführen von flachen Papier- oder Kartonzuschnitten (3);
- einzelnes Abseparieren der zugeführten Papier- oder Kartonzuschnitte (3); und
- Übergeben der abseparierten Papier- oder Kartonzuschnitte (3) auf ein zu verpackendes Produkt (5) oder eine zu verpackende Produktgruppe (5'),
wobei zum Abseparieren der zugeführten Papier- oder Kartonzuschnitte (3) und zum Übergeben der abseparierten Papier- oder Kartonzuschnitte (3) auf ein zu verpackendes Produkt (5) oder eine zu verpackende Produktgruppe (5') der mindestens eine Greifkopf (6) der Verpackungsmaschine kontinuierlich auf einer Umlaufbahn zwischen der Verpackungszuführung (2) und dem Übergabebereich (7), in welchem die einzelnen Papier- oder Kartonzuschnitte (3) von dem mindestens einen Greifkopf (6) auf das zu verpackende Produkt (5) oder auf die zu verpackende Produktgruppe (5') übergeben werden, bewegt wird, wobei hierzu der mindestens eine Greifkopf (6) in einer zykloidähnlichen oder zykloidförmigen Bahnbewegung derart angetrieben wird, so dass der mindestens eine Greifkopf (6) je 360° Umdrehung insgesamt drei sich wiederholende und aneinander angrenzende zykloidähnliche oder zykloidförmige Bahnstrecken durchläuft, und dass der mindestens eine Greifkopf (6) im Bereich der Verpackungszuführung (2) und im Übergabebereich (7) langsamer bewegt wird als beim Übergang des mindestens einen Greifkopfs (6) von der Verpackungszuführung (2) zu dem Übergabebereich (7).

## Claims

1. A packaging machine (1) for packaging products (5) or product groups (5'), in particular paper material or thin cardboard material, wherein the packaging machine (1) comprises the following:
- a packaging infeed (2) for feeding flat paper or cardboard blanks (3); and
- a separating device (4) for individually separating the supplied paper or cardboard blanks (3) and for transferring the separated paper or cardboard blanks (3) to a product (5) or a product group (5') to be packaged,
wherein the separating device (4) comprises at least one gripper head (6) and preferably exactly two gripper heads (6) opposite one another and a mechanism associated with the at least one gripper head (6) for preferably continuously moving the at least one gripper head (6) on an orbit between the packaging infeed (2) and a transfer region (7), in which the individual paper or cardboard blanks (3) are transferred from the at least one gripper head (6) to the product (5) or product group (5') to be packaged, wherein the mechanism associated with the at least one gripper head (6) is configured so as to drive the at least one gripper head (6) in a non-uniform orbital movement such that the at least one gripper head (6) is moved more slowly in the region of the packaging infeed (2) and in the transfer region (7) than during the transition of the at least one gripper head (6) from the packaging infeed (2) to the transfer region (7), **characterized in that**
the at least one gripper head (6) is rotatably supported about a rotational axis (10), and wherein the mechanism associated with the at least one gripper head (6) is configured so as to drive the at least one gripper head (6) in a cycloidal or cycloid-like orbital movement, wherein the cycloidal or cycloid-like orbital movement is selected such that the at least one gripper head (6) passes through a total of three repeating and consecutive cycloidal or cycloid-like path sections per 360° revolution.

2. The packaging machine (1) according to claim 1,
wherein the mechanism associated with the at least one gripper head (6) is configured such that, when the at least one gripper head (6) is located at a first transfer point between a first and a second cycloidal or cycloid-like path section, the at least one gripper head (6) is arranged on or in the region of the packaging infeed (2), and then, when the at least one gripper head (6) is located at a second transfer point between a third and the first cycloidal or cycloid-like path section, the at least one gripper head (6) is arranged at or near the transfer region (7).

3. The packaging machine (1) according to claim 1 or 2,
wherein the mechanism associated with the at least one gripper head (6) comprises a drivable transmission associated with a drive shaft (8), in particular a gear train (9), with which the at least one gripper head (6) is operatively connected in such a way that the at least one gripper head (6) rotates about its rotational axis (10) on the one hand, and the at least one gripper head (6) rotates about a shaft axis (11) of the drive shaft (8) on the other hand, wherein the rotational axis (10) of the at least one gripper head (6) runs parallel to the shaft axis (11) of the drive shaft (8) and lies outside the shaft axis (11), and wherein the shaft axis (11) preferably runs perpendicular to the transport direction (12), in which the products (5) or product groups (5') to be packaged are moved through the transfer region (7).

4. The packaging machine (1) according to claim 3,
wherein the transmission, in particular gear train (9), is configured in order to drive the at least one gripper head (6) in a uniform and rotational manner in a first rotational direction about the shaft axis (11), wherein the transmission, in particular gear train (9), is further configured in order to drive the at least one gripper head (6) in a second rotational direction opposite to the first rotational direction about the rotational axis (10) of the at least one gripper head (6) in a uniform and rotational manner.

5. The packaging machine (1) according to claim 4,
wherein the first and second rotational directions can be selected such that the at least one gripper head (6) is moved during the transition from the packaging infeed (2) to the transfer region (7) over a single cycloidal or cycloid-like path section, and that the at least one gripper head (6) moves, at least in regions, in the direction in which the products (5) or product groups (5') to be packaged are moved through the transfer region (7), wherein a rotational frequency with which the at least one gripper head (6) is rotationally driven about the shaft axis (11) and the rotational frequency with which the at least one gripper head (6) is driven rotationally about the rotational axis (10) are preferably chosen such that the at least one gripper head (6) moves in the transfer region (7) with at least approximately the same speed as the products (5) or product groups (5') to be packaged are moved through the transfer region (7).

6. The packaging machine (1) according to claim 4,
wherein the first and second rotational directions are selected such that the at least one gripper head (6) is moved over a total of two single cycloidal or cycloid-like path sections during the transition from the packaging infeed (2) to the transfer region (7), and that the at least one gripper head (6) moves, at least in regions, opposite to the direction in which the products (5) or product groups (5') to be packaged are moved through the transfer region (7) .

7. The packaging machine (1) according to any of claims 3 to 6, wherein a rotational frequency at which the at least one gripper head (6) is driven rotationally about the shaft axis (11), is preferably adjustable and in particular matches the rotational frequency at which the at least one gripper head (6) is driven rotationally about the rotational axis (10).

8. The packaging machine (1) according to any of claims 3 to 7, wherein the at least one gripper head (6) is connected to the rotational axis (10) via an arm region (14), wherein the arm region (14) extends on both sides over the rotational axis (10) and has two opposite end regions, on each of which at least one gripper head (6) is arranged.

9. The packaging machine (1) according to any one of claims 1 to 8,
wherein the at least one gripper head (6) is preferably configured as a vacuum gripper, and wherein, when the at least one gripper head (6) is moved on the orbital path between the packaging infeed (2) and the transfer region (7), a gripping region of the at least one gripper head (6) preferably points continuously radially outward with respect to the orbit.

10. A method for packaging products (5) or product groups (5'), in particular paper material or thin cardboard material, wherein the method comprises the following method steps:
- providing a packaging machine according to any of claims 1 to 9;
- feeding of flat paper or cardboard blanks (3);
- individually separating the fed paper or cardboard blanks (3); and
- transferring the separated paper or cardboard blanks (3) to a product (5) or a product group (5') to be packaged,
wherein, in order to separate the in fed paper or cardboard blanks (3) and to transfer the separated paper or cardboard blanks (3) to a product (5) or a product group (5') to be packaged, the at least one gripper head (6) is continuously moved on an orbital path between a packaging infeed (2) and a transfer region (7), in which the individual paper or cardboard blanks (3) are transferred from the at least one gripper head (6) to the product (5) or product group (5') to be packaged, wherein for this purpose the at least one gripper head (6) is driven in a cycloidal or cycloid-like orbital movement such that the at least one gripper head (6) passes through a total of three repeating and consecutive cycloidal or cycloid-like path sections per 360° revolution and that the at least one gripper head (6) is moved more slowly in the region of the packaging infeed (2) and the transfer region (7) than during the transition of the at least one gripper head (6) from the packaging infeed (2) to the transfer region (7).

## Revendications

1. Machine d'emballage (1) pour l'emballage de produits (5) ou de groupes de produits (5'), en particulier du matériel de papier ou du matériel de carton mince, dans laquelle la machine d'emballage (1) comprend ce qui suit :
- une alimentation d'emballage (2) pour l'alimentation en découpes de papier ou de carton (3) plates ; et
- un dispositif de séparation (4) pour la séparation individuelle des découpes de papier ou de carton (3) fournies et pour le transfert des découpes de papier ou de carton (3) séparées vers un produit (5) ou un groupe de produits (5') à emballer,
dans lequel le dispositif de séparation (4) comprend au moins une tête de préhension (6) et de préférence exactement deux têtes de préhension (6) opposées l'une à l'autre et un mécanisme associé avec l'au moins une tête de préhension (6) pour le déplacement de préférence en continu de l'au moins une tête de préhension (6) sur une orbite entre l'alimentation d'emballage (2) et une zone de transfert (7), dans lequel les découpes de papier ou de carton (3) individuelles sont transférées à partir de l'au moins une tête de préhension (6) jusqu'au produit (5) ou au groupe de produits (5') à emballer, dans lequel le mécanisme associé avec l'au moins une tête de préhension (6) est configuré de manière à entraîner l'au moins une tête de préhension (6) dans un mouvement orbital non uniforme de sorte que l'au moins une tête de préhension (6) est déplacée plus lentement dans la zone de l'alimentation d'emballage (2) et dans la zone de transfert (7) que durant le transfert de l'au moins une tête de préhension (6) à partir de l'alimentation d'emballage (2) jusqu'à la zone de transfert (7), **caractérisé en ce que**
l'au moins une tête de préhension (6) est supportée de manière rotative autour d'un axe de rotation (10), et dans lequel le mécanisme associé avec l'au moins une tête de préhension (6) est configuré de manière à entraîner l'au moins une tête de préhension (6) dans un mouvement orbital cycloïdal ou de type cycloïdal, dans lequel le mouvement orbital cycloïdal ou de type cycloïdal est sélectionné de sorte que l'au moins une tête de préhension (6) passe par un total de trois trajets orbitaux cycloïdaux ou de type cycloïdal se répétant et consécutifs par révolution de 360°.

2. Machine d'emballage (1) selon la revendication 1,
dans laquelle le mécanisme associé avec l'au moins une tête de préhension (6) est configuré de sorte que, lorsque l'au moins une tête de préhension (6) est située sur un premier point de transfert entre un premier et un deuxième trajet orbital cycloïdal ou de type cycloïdal, l'au moins une tête de préhension (6) est agencée sur ou dans la zone de l'alimentation d'emballage (2), et ensuite, lorsque l'au moins une tête de préhension (6) est située sur un deuxième point de transfert entre un troisième et le premier trajet orbital cycloïdal ou de type cycloïdal, l'au moins une tête de préhension (6) est agencée sur ou à proximité de la zone de transfert (7).

3. Machine d'emballage (1) selon la revendication 1 ou 2,
dans laquelle le mécanisme associé avec l'au moins une tête de préhension (6) comprend une transmission entraînable associée avec un arbre d'entraînement (8), en particulier un train d'engrenages (9), avec lequel l'au moins une tête de préhension (6) est fonctionnellement reliée de telle sorte que l'au moins une tête de préhension (6) tourne autour de son axe de rotation (10) d'une part, et l'au moins une tête de préhension (6) tourne autour d'un axe d'arbre (11) de l'arbre d'entraînement (8) d'autre part, dans lequel l'axe de rotation (10) de l'au moins une tête de préhension (6) s'étend parallèlement à l'axe d'arbre (11) de l'arbre d'entraînement (8) et se trouve à l'extérieur de l'axe d'arbre (11), et dans lequel l'axe d'arbre (11) s'étend de préférence perpendiculairement à la direction de transport (12), dans laquelle les produits (5) ou les groupes de produits (5') à emballer sont déplacés à travers la zone de transfert (7).

4. Machine d'emballage (1) selon la revendication 3,
dans laquelle la transmission, en particulier un train d'engrenages (9), est configurée de façon à entraîner l'au moins une tête de préhension (6) de manière uniforme et rotative dans un premier sens de rotation autour de l'axe d'arbre (11), dans laquelle la transmission, en particulier un train d'engrenages (9), est en outre configurée de façon à entraîner l'au moins une tête de préhension (6) dans un deuxième sens de rotation à l'opposé du premier sens de rotation autour de l'axe de rotation (10) de l'au moins une tête de préhension (6) de manière uniforme et rotative.

5. Machine d'emballage (1) selon la revendication 4,
dans laquelle les premier et deuxième sens de rotation peuvent être sélectionnés de sorte que l'au moins une tête de préhension (6) soit déplacée durant le transfert à partir de l'alimentation d'emballage (2) jusqu'à la zone de transfert (7) uniquement via un seul trajet orbital cycloïdal ou de type cycloïdal, et que l'au moins une tête de préhension (6) se déplace, au moins dans des zones, dans la direction dans laquelle les produits (5) ou les groupes de produits (5') à emballer sont déplacés à travers la zone de transfert (7), dans laquelle une fréquence de rotation avec laquelle l'au moins une tête de préhension (6) est entraînée en rotation autour de l'axe d'arbre (11) et la fréquence de rotation avec laquelle l'au moins une tête de préhension (6) est entraînée en rotation autour de l'axe de rotation (10) sont de préférence choisies de sorte que l'au moins une tête de préhension (6) se déplace dans la zone de transfert (7) avec au moins approximativement la même vitesse que les produits (5) ou les groupes de produits (5') à emballer sont déplacés à travers la zone de transfert (7).

6. Machine d'emballage (1) selon la revendication 4,
dans laquelle les premier et deuxième sens de rotation sont sélectionnés de sorte que l'au moins une tête de préhension (6) soit déplacée via un seul trajet orbital cycloïdal ou de type cycloïdal lors du transfert à partir de l'alimentation d'emballage (2) jusqu'à la zone de transfert (7), et que l'au moins une tête de préhension (6) se déplace, au moins dans des zones, à l'opposé du sens dans lequel les produits (5) ou groupes de produits (5') à emballer sont déplacés à travers la zone de transfert (7).

7. Machine d'emballage (1) selon l'une quelconque des revendications 3 à 6,
dans laquelle une fréquence de rotation à laquelle l'au moins une tête de préhension (6) est entraînée en rotation autour de l'axe d'arbre (11) est de préférence réglable et correspond en particulier à la fréquence de rotation à laquelle l'au moins une tête de préhension (6) est entraînée en rotation autour de l'axe de rotation (10).

8. Machine d'emballage (1) selon l'une quelconque des revendications 3 à 7,
dans laquelle l'au moins une tête de préhension (6) est reliée à l'axe de rotation (10) via une zone de bras (14), dans laquelle la zone de bras (14) s'étend des deux côtés sur l'axe de rotation (10) et a deux zones d'extrémité opposées, sur chacune desquelles au moins une tête de préhension (6) est agencée.

9. Machine d'emballage (1) selon l'une quelconque des revendications 1 à 8,
dans laquelle l'au moins une tête de préhension (6) est de préférence configurée en tant que préhenseur à vide, et dans laquelle, lorsque l'au moins une tête de préhension (6) est déplacée sur le trajet orbital entre l'alimentation d'emballage (2) et la zone de transfert (7), une zone de préhension de l'au moins une tête de préhension (6) pointe de préférence de manière continue radialement vers l'extérieur par rapport à l'orbite.

10. Procédé d'emballage de produits (5) ou de groupes de produits (5'), en particulier du matériel de papier ou du matériel de carton mince, dans lequel le procédé comprenant les étapes du procédé suivantes :
- la fourniture d'une machine d'emballage selon l'une quelconque des revendications 1 à 9 ;
- l'alimentation de découpes de papier ou de carton (3) plates ;
- la séparation individuelle des découpes de papier ou de carton (3) alimentées ; et
- le transfert des découpes de papier ou de carton (3) séparées vers un produit (5) ou un groupe de produits (5') à emballer,
dans lequel, de façon à séparer les découpes de papier ou de carton (3) alimentées et de transférer les découpes de papier ou de carton (3) séparées vers un produit (5) ou un groupe de produits (5') à emballer, au moins une tête de préhension (6) est déplacée en continu sur un trajet orbital entre une alimentation d'emballage (2) et une zone de transfert (7), dans lequel les découpes de papier ou de carton (3) individuelles sont transférées à partir de l'au moins une tête de préhension (6) jusqu'au produit (5) ou au groupe de produits (5') à emballer, dans lequel, à cet effet, l'au moins une tête de préhension (6) est entraînée dans un mouvement orbital cycloïdal ou de type cycloïdal de sorte que l'au moins une tête de préhension (6) passe à travers un total de trois trajets orbitaux cycloïdaux ou de type cycloïdal se répétant et consécutifs par rotation de 360° et que l'au moins une tête de préhension (6) est déplacée plus lentement dans la zone d'alimentation d'emballage (2) et la zone de transfert (7) que durant le transfert de l'au moins une tête de préhension (6) à partir de l'alimentation d'emballage (2) jusqu'à la zone de transfert (7).
